# EUROPÄISCHE PATENTSCHRIFT

(11) **EP 1 785 037 B1**
(45) Veröffentlichungstag und Bekanntmachung des Hinweises auf die Patenterteilung: **20.04.2011**
(21) Anmeldenummer: 06023362.4
(22) Anmeldetag: 09.11.2006
(51) Int. Cl.: A23C 9/20, A61K 35/20, A23C 19/076

(54) **Milchprodukt umfassend Stutenmilch und Ziegenmilch, Verfahren zu dessen Herstellung und deren Verwendung**
Milk product comprising mare's milk and goat's milk and process for its production and its use
Produit laitier contenant du lait de jument et du lait de chèvre, prodédé pour son production et son utilisation

(30) Priorität: 10.11.2005 DE 102005053725
(43) Veröffentlichungstag der Anmeldung: 16.05.2007
(73) Patentinhaber: St. Leonhardsquelle GmbH & Co. KG, 83071 Stephanskirchen/Bad Leonhardspfunzen (DE)
(72) Erfinder: Abfalter, Johann, 83404 Ainring (DE)
(74) Vertreter: Hager, Thomas Johannes

(56) Entgegenhaltungen:
- EP-A- 1 482 027
- EP-A- 1 593 309
- EP-A1- 1 293 130
- FR-A1- 2 232 999
- RU-C2- 2 173 524
- RU-C2- 2 174 320
- US-A- 6 156 320
- MURARO MARIA ANTONELLA ET AL: "SOY FORMULAS AND NONBOVINE MILK" ANNALS OF ALLERGY, ASTHMA & IMMUNOLOGY, ARLINGTON HEIGHTS, IL, US, Bd. 89, Nr. 6 SUPP 1, Dezember 2002 (2002-12), Seiten 97-101, XP009076125 ISSN: 1081-1206

## Beschreibung

Vor etwa 5000 Jahren entdeckten die Sumerer, dass Milch auch für Menschen ein wohlschmeckendes Getränk ist. Doch nicht nur die reine Milch, auch verschiedene Milchprodukte waren ihnen schon bekannt. Die Griechen, Römer, Ägypter und Germanen waren es schließlich, die auch Esels-, Schafs-, Ziegen-, Pferde- und sogar Kamelmilch verarbeiteten. Kefir kannten schon die asiatischen Reitervölker, ebenso Trockenmilch. Hierzu wurde der Rahm der Milch abgeschöpft, in flachen Gefäßen in der Sonne getrocknet und auf ihren Kriegszügen in Wasser wieder angerührt. Trockenmilch war die erste Methode, Milch haltbar zu machen. Luis Pasteur gelang ein weiterer Schritt, indem er entdeckte, dass Milch auch durch Erhitzen (Pasteurisierung) länger haltbar gemacht werden kann.

Heute ist bekannt, dass die Stutenmilch unter den Tiermilchen insbesondere hinsichtlich ihres Eiweiß- und Milchzuckergehalts von den uns bekannten Milcharten der humanen Muttermilch am nächsten ist. Bekannt sind über 40 Vitalstoffe, die man in der Stutenmilch findet. Vorteilhaft ist insbesondere der hohe Milchsäuregehalt der Stutenmilch, der Gehalt an Eisen und Vitamin C ist höher als in der Muttermilch, der Fettgehalt niedriger und Stutenmilch fördert auf natürliche Weise, durch Aktivierung der Milchsäuregärung in den Darmabschnitten die Reinigung des Darms und die Entwicklung einer gesunden Darmflora.

Die folgende Tabelle 1 gibt die Energie- und Nährstoffgehalte in alternativen Tiermilchen im Vergleich mit Kuhmilch und Frauenmilch wieder.

**Tabelle 1:**

| Energie- und Nährstoffgehalte in alternativen Tiermilchen im Vergleich mit Kuhmilch und Frauenmilch (7) | | | | | | |
|---|---|---|---|---|---|---|
| | | Schafmilch | Stutenmilch | Ziegenmilch | Kuhmilch | reife Frauenmilch |
| Energie | kcal | 96 | 47 | 67 | 64 | 69 |
| | kJ | 400 | 199 | 281 | 269 | 288 |
| | | | | | | |
| Wasser | g | 82,7 | 89,7 | 86,6 | 87,7 | 87,5 |
| | | | | | | |
| Protein | g | 5,27 | 2,21 | 3,69 | 3,34 | 1,13 |
| | | | | | | |
| Fett | g | 6.26 | 1,5 | 3,92 | 3,57 | 4.03 |
| Linolsäure | g | 0,16 | * | 0,09 | 0,09 | 0,38 |
| Cholesterin | mg | * | * | 11,0 | 11,7 | 25,0 |
| | | | | | | |
| Kohlenhydrate | g | 4,55 | 6,2 | 4,2 | 4,6 | 7.0 |
| Laktose | g | 4,55 | 6,2 | 4,2 | 4,6 | 7,0 |
| | | | | | | |
| Mineralstoffe | g | 0,86 | 0,36 | 0,79 | 0,74 | 0,21 |
| Natrium | mg | 30 | * | 42 | 45 | 13 |
| Kalium | mg | 182 | 64 | 181 | 141 | 47 |
| Magnesium | mg | 12 | 9 | 14 | 12 | 3 |
| Kalzium | mg | 183 | 110 | 127 | 120 | 32 |
| Phosphor | mg | 115 | 54 | 109 | 92 | 15 |
| Chlorid | mg | 76 | * | 142 | 102 | 40 |
| | | | | | | |
| Eisen | µg | 100 | 65 | 50 | 59 | 58 |
| Kupfer | µg | 88 | 30 | 18 | 7 | 72 |
| Jod | µg | * | * | 4,1 | 6,1 | 6,3 |
| | | | | | | |
| Vitamin A (Retinol) | µg | 50 | 12 | 68 | 28 | 69 |
| Carotinoide | µg | 5 | 32 | 35 | 17 | 3 |
| Vitamin D | µg | * | * | 0,25 | 0,174 | 0,067 |
| Vitamin B1 | µg | 48 | 30 | 49 | 37 | 15 |
| Vitamin B2 | µg | 230 | 30 | 150 | 180 | 38 |
| Vitamin B6 | µg | * | 30 | 27 | 36 | 14 |
| Biotin | µg | 9 | * | 3,9 | 3,5 | 0,6 |
| Vitamin B12 | µg | 0,51 | 0,3 | 0,07 | 0,41 | 0,05 |
| Folsäure | µg | * | * | 0,8 | 6,4 | 8,5 |
| Niacin | µg | 450 | 140 | 320 | 90 | 170 |
| Vitamin C | mg | 4,25 | 15 | 2 | 1,7 | 4,4 |

| | | | | | | |
|---|---|---|---|---|---|---|
| Nährstoffgehalte in 100 g; * = keine Angaben | | | | | | |

RU 2174320 und RU 2173524 offenbaren Milchprodukte, die Kuhmilch und / oder Sojamilch und / oder Ziegenmilch und / oder Stutenmilch in jeweils gleichen Verhältnissen enthalten. Sie sind mit bestimmten Milchsäure-Stämmen fermentiert, wodurch die diätetischen und technologischen Produkteigenschaften verbessert wurden.

Aufgrund dieser überragenden Eigenschaften der Stutenmilch hat diese positive Auswirkungen auf Stoffwechselstörung, Leberstörung, Allergien (insbesondere Kuhmilchallergie), Neurodermitis, Psoriasis, Akne und Ekzeme, Fettstoffwechselstörungen, Magen- und Darmerkrankung, Entzündung der Magen- und Zwölffingerdarmschleimhaut, Bauchspeicheldrüsenschwäche, nervöse Erschöpfungszustände, Managerkrankheit, insbesondere Stressfolgen, Chemotherapie bzw. Krebsnachbehandlung, Herz- und Kreislaufstörungen, Tuberkulose, Immunschwäche und Altersabbau.

Nachteilig ist jedoch, dass Stutenmilch aufgrund ihrer Zusammensetzung nicht pasteurisiert werden kann und somit nur sehr begrenzt haltbar ist. Im Kühlschrank hält die Stutenmilch lediglich zwei bis drei Tage. Zwar kann Stutenmilch bei -18°C eingefroren werden, was die Haltbarkeit auf mindestens sechs Monaten verlängert, jedoch sind frische Milchprodukte vorzuziehen. Alternativ dazu wird Stutenmilch im Handel als Stutenmilchpulver angeboten. Dieses Stutenmilchpulver ist bei 4°C ca. 3 Wochen haltbar.

Aufgrund der besonders vorteilhaften Zusammensetzung der Stutenmilch und ihrem breiten Anwendungsgebiet besteht zunehmend Nachfrage nach Stutenmilchprodukten in haltbarer Form, die mit einer normalen Bevorratung eines Haushalts in Einklang stehen.

Überraschenderweise hat sich nun herausgestellt, dass die äußerst empfindliche Stutenmilch durch Mischen mit Ziegenmilch stabilisiert werden kann. Während Stutenmilch in reiner Form nach etwa zwei Stunden bitter wird und bei einer geeigneten Kühltemperatur (ca. 4°C) nach ca. zwei Tagen verdirbt, erweist sich ein Milchprodukt umfassend Stutenmilch und Ziegenmilch als wesentlich stabiler. Ein derartiges Gemisch ist bei einer Kühltemperatur von ca. 4°C noch nach zwei Wochen genießbar.

Bioenergetische Untersuchungen haben gezeigt, dass sich die Resonanz des Milchprodukts während der Lagerung verändert. Je nach Lagerungsdauer zeigt das Milchprodukt positive Auswirkungen auf den menschlichen Organismus. So wirkt sich das Milchprodukt in besonderer Weise vorteilhaft aus, insbesondere auf Herz, Bronchien, Lunge, männliche Reproduktionsorgane, Gallenproduktion, Bauchspeicheldrüse, Nebennieren, Magen, Darm, insbesondere Mastdarm, Zwölffingerdarm und Dickdarm, Muskulatur, Lunge, Haut und/oder Venen.

Des Weiteren hat sich herausgestellt, dass eine Mischung umfassend Stutenmilch und Ziegenmilch problemlos pasteurisiert werden kann und somit problemlos weiterverarbeitet werden kann zu allen im Handel erhältlichen Milchprodukten wie Vollmilch, fettarmer Milch, Magermilch, H-Milch, Buttermilch, Sauermilch, Kondensmilch, Trockenmilch, Kefir, Joghurt, Frischkäse, Käse, Butter, Sahne und/oder Eiscreme.

Von besonders vorteilhaft ist auch die geschmackliche Komponente dieses Gemisches aus Stutenmilch und Ziegenmilch. Während die Stutenmilch süßlich, leicht nussig schmeckt und eher als dünn empfunden wird, schmeckt die Ziegenmilch bitter und ist nicht jedermanns Geschmack. Das erfindungsgemäße Milchprodukt umfassend Stutenmilch und Ziegenmilch kombiniert diese beiden Geschmacksrichtungen vorteilhaft, so dass sie für viele Menschen besser trinkbar ist, insbesondere für Kinder und Babies. Hier zeigt sich, dass bereits ein geringer Zusatz (unter 10 Gew.-%) von Stutenmilch eine erhebliche geschmackliche Verbesserung der Ziegenmilch bewirkt. Durch diesen besonders vorteilhaften Geschmack kann eine wesentlich breitere Zielgruppe angesprochen werden, die so die gesunden, ernährungsphysiologisch wertvollen Bestandteile der Stutenmilch nutzen können.

Weiter vorteilhaft ist, dass es durch das Vermischen der Stutenmilch mit Ziegenmilch und die damit verbundene verlängerte Haltbarkeit möglich ist, Stutenmilchprodukte zu einem relativ geringen Preis im Handel anzubieten. Aufgrund der besseren Haltbarkeit dieser Milchprodukte wird auch der Transport, Verarbeitung, einschl. des Weitertransports zum Abnehmer, wesentlich erleichtert.

Das erfindungsgemäße Milchprodukt kann hierin Rohmilch, Vorzugsmilch, Vollmilch, fettarmer Milch, Magermilch, H-Milch, Buttermilch, Sauermilch, Kondensmilch, Trockenmilch, Kefir, Joghurt, Frischkäse, Käse, Butter, Sahne und/oder Eiscreme sein. Besonders bevorzugt kann das Milchprodukt Rohmilch, Vorzugsmilch, Vollmilch, fettarmer Milch, Magermilch, H-Milch, Frischkäse und besonders bevorzugt Frischkäse sein.

Als Stutenmilch und Ziegenmilch kann Rohmilch, Vorzugsmilch, fettarme Milch, Magermilch und/oder H-Milch von Stute und Ziege eingesetzt werden. Bevorzugt kann die Stutenmilch und Ziegenmilch Rohmilch oder Vorzugsmilch sein, besonders bevorzugt kann sie Rohmilch sein.

Das Milchprodukt umfassend Stutenmilch und Ziegenmilch umfasst 40 Gewichts-% Stutenmilch und 60 Gewichts-% Ziegenmilch, jeweils bezogen auf 100 Gewichts-% des Gesamtmilchgehalts des Milchprodukts bestehend aus Stutenmilch und Ziegenmilch.

Das Milchprodukt umfassend Stutenmilch und Ziegenmilch, im folgenden "Milchmischung" genannt, kann zusätzlich andere Milcharten wie z.B. Frauenmilch, Tiermilch und/oder Pflanzenmilch enthalten.

Hierbei ist die Tiermilch ausgewählt aus mindestens einer Milchsorte, umfassend Kamelmilch, Schafsmilch, Kuhmilch, Büffelmilch und/oder Eselsmilch, vorzugsweise Kuhmilch und Schafsmilch, am meisten bevorzugt Kuhmilch.

Als Pflanzenmilch können alle in der Lebensmittelindustrie verwendeten Milchsorten von Pflanzen verwendet werden, vorzugsweise Sojamilch.

Der Begriff "Frauenmilch" bedeutet, dass es sich hier um Muttermilch verschiedener Mütter handelt, des Weiteren kann es sich jedoch auch um reine Muttermilch, d.h., Milch von einer Mutter handeln.

Bevorzugt wird der Milchmischung zusätzlich Tiermilch, bevorzugt Kuhmilch, Schafsmilch und/oder Büffelmilch zugesetzt. Besonders bevorzugt ist die Zugabe von Kuhmilch und/oder Schafsmilch.

Bei einem Milchprodukt für Allergiker darf das Milchprodukt gerade die Milchsorte gegen die eine Allergie besteht nicht enthalten.

Die Milchmischung kann in jedem Stadium ihrer Verarbeitung und abhängig von dem herzustellenden Milchprodukt zusätzliche Bestandteile, wie beispielsweise Früchte, Nüsse, Gemüsezubereitung, Kakteenextrakt, Kuchenzubereitung, Samenkerne, Cerealien, Aroma, Gewürze, Kräuter, Mineralstoffe, Vitamine und/oder pharmazeutische Wirkstoffe enthalten.

In einer bevorzugten Ausführungsform kann die Milchmischung Früchte, Nüsse, Gemüsezubereitung, Samenkerne, Cerealien, Aroma, Gewürze und/oder Kräuter enthalten. Besonders bevorzugt kann sie Gemüsezubereitung, Gewürze, Kräuter und/oder Mineralstoffe enthalten.

Als Fruchtzusatz können alle essbaren Früchte verwendet werden, insbesondere Passionsfrucht, Sternfrucht, Litschi, Kirsche, Apfel, Birne, Quitte, Aprikose, Pfirsich, Nektarine, Pflaume, Zwetschge, Banane, Papaya, Melone, Mango, Kiwi, Physialis, Avocado als auch alle Beerensorten wie beispielsweise Erdbeeren, Himbeere, Blaubeere, Stachelbeere, rote Johannisbeere, schwarze Johannisbeere, Brombeere und/oder Holunderbeere.

Nussbestandteil kann Haselnuss, Erdnuss, Mandel, Pekanuss, Cashewnuss, Walnuss und/oder Kokosnuss, vorzugsweise Walnuss, Haselnuss und/oder Erdnuss sein.

Als Gemüsezubereitung können jegliche genießbare Gemüsesorten verwendet werden, insbesondere Artischocke, Zucchini, Gurke, Paprika, Olive, Pilze, Fenchel, Bohnen, Lauch, Kohlrabi, Tomate, Karotte, Aubergine, Sellerie, rote Beete, Meerrettich und/oder Kartoffel, bevorzugt Paprika, Gurke, Karotte, Meerrettich und besonders bevorzugt Paprika und/oder Gurke sein.

Kakteenextrakte können Extrakte aus Sukkulenten, insbesondere Aloe vera, Nopalkaktus und/oder Feigenkaktus, sein.

Kuchenzubereitung können jegliche Formen von zerkleinertem Kuchen wie beispielsweise Käsekuchen, Mohnkuchen und/oder Apfelkuchen sein.

Samenkerne können Maiskerne, Kürbiskerne, Sonnenblumenkerne und/oder Pistazienkerne sein.

Cerealien können Haferflocken, Weizenkleie, Weizen, Gerste, Hafer, Dinkel und/oder Roggen sein.

Als Mineralstoffe können jegliche in der Nahrungsmittelindustrie verwendeten Salze, insbesondere Kochsalz, Meersalz und/oder Steinsalz verwendet werden, besonders bevorzugt ist Kochsalz und/oder Meersalz.

Gewürze können Paprika, Pfeffer, Chili, Zwiebel, Knoblauch, Curry, Koriander und/oder Glutamat sein, bevorzugt Paprika, Pfeffer und/oder Zwiebel, besonders bevorzugt Paprika.

Kräuter können Basilikum, Salbei, Schnittlauch, Petersilie, Melisse, Zitronenmelisse und/oder Zitronengras sein, bevorzugt Basilikum, Schnittlauch, Petersilie und/oder Salbei, besonders bevorzugt Schnittlauch, Petersilie und/oder Basilikum.

Aroma kann in diesem Zusammenhang Vanille, Kakao und/oder Kaffee sowie alle natürlichen und naturidentischen Aromastoffe sein.

Vitamine können alle für den Menschen nützlichen Vitamine darstellen, insbesondere Vitamin A, D, E, K, B1, B2, B6, B12, Niacin, Biotin, und/oder Folsäure sein, bevorzugt Vitamin C und E.

Des Weiteren können als zusätzliche Bestandteile pharmazeutische Wirkstoffe, insbesondere Antibiotika enthalten sein, insbesondere wenn das erfindungsgemäße.Milchprodukt als Babynahrung eingesetzt wird und zur Therapie von Krankheiten verwendet wird.

Die vorliegende Erfindung betrifft weiterhin ein Verfahren zur Herstellung eines Milchprodukts umfassend Stutenmilch und Ziegenmilch, umfassend den folgenden Schritt:
(i) Mischen von Stutenmilch und Ziegenmilch
   und optional mindestens einen der folgenden Schritte:
(ii) Pasteurisieren der Milchmischung,
(iii) Zugeben von Starterkulturen,
(iv) Vorreifen,
(v) Einlaben,
(vi) Trennen des Bruch-/Molkegemischs,
(vii) Zusetzen von zusätzlichen Bestandteilen.

Je nach dem, welches Milchprodukt hergestellt werden soll, beispielsweise Rohmilch, Vorzugsmilch, Vollmilch, fettarmer Milch, Magermilch, H-Milch, Buttermilch, Sauermilch, Kondensmilch, Trockenmilch, Kefir, Joghurt, Frischkäse, Käse, Butter, Sahne und/oder Eiscreme, bevorzugt Käse, Frischkäse, Joghurt oder Babynahrung, besonders bevorzugt Frischkäse, können die entsprechenden Schritte (ii) bis (vii), die auf dem Gebiet der Molkereiproduktherstellung dem Fachmann bekannt sind, durchgeführt werden.

Zur Herstellung von Trinkmilch wird bevorzugt lediglich Schritt (i) und/oder Schritt (ii) des Verfahrens durchgeführt.

In einer bevorzugten Ausführungsform können alle der Schritte (i) bis (vii) durchgeführt werden, insbesondere zur Käseherstellung, besonders bevorzugt zur Frischkäseherstellung.

Vorzugsweise wird Schritt (ii), das Pasteurisieren bei 72°C für 15 Sekunden durchgeführt. Das Zugeben der Starterkultur aus Schritt (iii) erfolgt nach Abkühlen der Milch auf Einlabungstemperatur. Die Einlabungstemperatur beträgt 20 bis 50°C, bevorzugt 30 bis 35°C, besonders bevorzugt 30°C.

Bevorzugt schließt sich an Schritt (iii) der Schritt des Vorreifens (Schritt (iv)) an. Das Vorreifen wird vorzugsweise durchgeführt während einer Zeitspanne von 10 bis 50 Minuten, bevorzugt von 20 bis 40 Minuten und besonders bevorzugt 30 Minuten.

Nach Schritt (iv) schließt sich bevorzugt Schritt (v) an, das Einlaben. Das Einlaben wird durchgeführt vorzugsweise mit natürlichem Zickellab und/oder Kälberlab. Das Einlaben wird durchgeführt bei einer Temperatur von 20 bis 50°C, bevorzugt bei 30 bis 40°C und besonders bevorzugt bei 30°C. Der natürliche Zickellab und/oder Kälberlab wird in einer Menge von 2 bis 60 mg/100 ml Milch, vorzugsweise 5 bis 60 mg/100 ml Milch und besonders bevorzugt in einer Menge von 10 bis 50 mg/100 ml Milch verwendet.

Nach Schritt (v) kann Schritt (vi) durchgeführt werden, d.h., das Schneiden der Gallerte und nachfolgende Trennung des Bruch-/Molkegemischs. Die Trennung des Bruch-/Molkegemischs wird in einem Fertiger durchgeführt zur Erzielung einer ausreichenden Trockenmasse.

Optional können dem so entstandenen Produkt noch, zusätzliche Bestandteile, wie beispielsweise Früchte, Nüsse, Gemüsezubereitung, Kakteenextrakt, Kuchenzubereitung, Samenkerne, Cerealien, Aroma, Gewürze, Kräuter, Mineralstoffe, Vitamine und/oder pharmazeutische Wirkstoffe, zugesetzt werden, vorzugsweise Gemüsezubereitungen wie gefriergetrocknetes Paprika-Granulat und/oder Paprika-Würzextrakt (Oleoresin) sowie Salze und/oder Aromastoffe zur geschmacklichen Verfeinerung.

Optional kann das durch eines der erfindungsgemäßen Verfahren hergestellte Milchprodukt verpackt werden. Vorzugsweise erfolgt das Verpacken in Kisten, Tonnen, Kanister, Dosen, Tüten, Flaschen, Tetra-Packs, Becher, Folien und/oder Papier, besonders bevorzugt in Flaschen, Tetra-Packs, Becher und/oder Folien, besonders bevorzugt in Dosen.

In einer bevorzugten Ausführungsform der vorliegenden Erfindung wird ein Frischkäse aus einer Milchmischung von Stuten- und Ziegenmilch hergestellt. Hierzu wird eine Milchmischung verwendet, die 40 Gewichts-% Stutenmilch und 60 Gewichts-% Ziegenmilch enthält, jeweils bezogen auf 100 Gewichts-% des Gesamtmilchgehalts des Milchprodukts bestehend aus Stutenmilch und Ziegenmilch.

Der Säuregrad der Ausgangsmilch beträgt ca. SH°<10. In einem sich anschließenden Pasteurisierungsschritt (Schritt (ii)) wird die Milchmischung pasteurisiert, vorzugsweise bei 72°C für 15 Sekunden. An den Pasteurisierungsschritt schließt sich die Zugabe einer Starterkultur an. Die Starterkultur kann Milchsäurebakterien und/oder Hefekultur umfassen, insbesondere kann sie aus Milchsäurebakterien bestehen. Nach Abkühlung der Käsereimilch auf Einlabungstemperatur wird die so erhaltene Mischung anschließend 30 Minuten reifen gelassen (Vorreifungszeit).

Nach der Zugabe der Starterkulturen erfolgt das Einlaben mit natürlichem Zickellab und/oder Kälberlab. Hierzu wird eine Temperatur von 20 bis 50°C, vorzugsweise von 30 bis 40°C und am meisten bevorzugt von 30°C angewendet. Der Zickellab und/oder Kälberlab wird in einer Menge von 2 bis 60 mg/100 ml Milch, vorzugsweise 5 bis 60 mg/100 ml Milch und besonders bevorzugt in einer Menge von 10 bis 50 mg/100 ml Milch verwendet.

An diesen Verfahrensschritt schließt sich das Schneiden der Gallerte mit nachfolgender Trennung des Bruch-/Molkegemischs an, das vorzugsweise in einem Fertiger durchgeführt wird, um eine ausreichende Trockenmasse zu erzielen.

Nach Trennung des Bruch-/Molkegemischs kann ein oder mehrere zusätzliche Bestandteile zugesetzt werden, wie beispielsweise Früchte, Nüsse, Gemüsezubereitung, Kakteenextrakte, Kuchenzubereitung, Samenkerne, Cerealien, Aromen, Gewürze, Mineralstoffe, Vitamine und/oder pharmazeutische Wirkstoffe erfolgen, insbesondere von gefriergetrocknetem Paprika-Granulat und/oder Paprika-Gewürzextrakt (Oleoresin). Als weitere Zusatzstoffe können Salz und/oder Aroma zur geschmacklichen Verfeinerung zugesetzt werden.

Des Weiteren kann der so hergestellte Frischkäse portionsweise in Becher und/oder Dosen, bevorzugt in Dosen abgepackt werden. Das so entstandene Produkt ist gekühlt mindestens drei Monate haltbar.

Beispielhaft für die vorliegende Erfindung wurde folgende Frischkäsezubereitung aus einer Milchmischung von Stutenmilch und Ziegenmilch hergestellt.

### Beispiel 1:

### Frischkäse einer Milchmischung aus Stutenmilch und Ziegenmilch.

Eine Milchmischung bestehend aus 40 Gewichts-% Stutenmilch und 60 Gewichts-% Ziegenmilch mit einem Säuregrad der Milchmischung von SH°<10 wurde bei 72°C für 15 Sekunden pasteurisiert. Nach Zugabe von Milchsäurebakterien als Starterkultur nach Abkühlung der Käsereimilch auf Einlabungstemperatur von 30°C wurde die Mischung anschließend 30 Minuten zur Vorreifung stehengelassen.

Bei einer einschließenden Einlabung mit einem Gemisch aus natürlichem Zickellab und Kälberlab in einer Menge von 10 bis 50 mg/pro 100 ml Milch bei einer Temperatur von 30°C wurde das Produkt weiterverarbeitet. Nach Schneiden der Gallerte und nachfolgender Trennung des Bruch-/Molkegemischs im Fertiger zur Erzielung einer ausreichenden Trockenmasse wurde die Frischkäsezubereitung erhalten. Diese Frischkäsezubereitung wurde nun weiter verfeinert durch Zugabe von gefriergetrocknetem Paprika-Granulat und Paprika-Gewürzextrakt (Oleoresin) auf dem Trägerstoff Salz zur Aromatisierung der Käsemasse.

Die so hergestellte Frischkäsemasse wurde in Becher abgepackt und weist ein Mindesthaltbarkeitsdatum von drei Monaten bei einer Kühlung von 4°C (Kühlschrank) auf.

### Beispiel 2:

### Herstellung einer Frischmilch umfassend Stutenmilch und Ziegenmilch.

Diese Frischmilch kann sowohl zur Ernährung von Babys/Säuglingen als auch zur Ernährung von Kindern und Erwachsenen verwendet werden, die insbesondere die hervorragenden Eigenschaften. der Stutenmilch nutzen möchten.

Hierzu wurde Stutenmilch in einer Menge von 40 Gewichts-% mit 60 Gewichts-% Ziegenmilch gemischt. Eine so erhaltene Milchmischung ist bei einer Kühltemperatur von ca. 4°C (Kühlschrank) ca. zwei Wochen haltbar.

## Patentansprüche

1. Milchprodukt im folgenden auch Milchmischung genannt, umfassend Stutenmilch und Ziegenmilch, **dadurch gekennzeichnet, dass** das Milchprodukt 40 Gewichts-% Stutenmilch und 60 Gewichts-% Ziegenmilch umfasst.

2. Milchprodukt nach Anspruch 1, wobei das Milchprodukt Rohmilch, Vorzugsmilch, Vollmilch, fettarme Milch, Magermilch, H-Milch, Buttermilch, Sauermilch, Kondensmilch, Trockenmilch, Kefir, Joghurt, Frischkäse, Käse, Butter, Sahne und/oder Eiscreme ist.

3. Milchprodukt nach Anspruch 1 oder 2, wobei die Milch von Stute und Ziege Rohmilch, Vorzugsmilch, fettarme Milch, Magermilch und/oder H-Milch ist.

4. Milchprodukt , umfassend die Milchmischung nach einem der Ansprüche 1-3 und zusätzlich andere Milcharten ausgewählt aus Frauenmilch, Tiermilch und/oder Pflanzenmilch.

5. Milchprodukt nach Anspruch 4, wobei Tiermilch mindestens eine Milchsorte ist, ausgewählt aus Kamelmilch, Schafsmilch, Kuhmilch, Büffelmilch und/oder Eselsmilch.

6. Milchprodukt nach Anspruch 4, wobei Pflanzenmilch Sojamilch ist.

7. Milchprodukt nach Anspruch 4, wobei Frauenmilch Muttermilch verschiedener Mütter ist.

8. Milchprodukt nach einem der Ansprüche 1 bis 7, wobei das Milchprodukt als zusätzlichen Bestandteil Früchte, Nüsse, Gemüsezubereitung, Kakteenextrakte, Kuchenzubereitung, Samenkerne, Cerealien, Aromen, Gewürze, Kräuter, Mineralstoffe, Vitamine und/oder pharmazeutische Wirkstoffe umfasst.

9. Verfahren zur Herstellung eines Milchprodukts nach den Ansprüchen 1 bis 8, umfassend den folgenden Schritt:
(i) Mischen von Stutenmilch und Ziegenmilch in einem Verhältnis von 40 : 60 Gewichts-%.

10. Verfahren nach Anspruch 9, des Weiteren umfassend mindestens einen der folgenden Schritte:
(ii) Pasteurisieren der Milchmischung,
(iii) Zugeben von Starterkulturen,
(iv) Vorreifen,
(v) Einlaben,
(vi) Trennen des Bruch-/Molkegemischs,
(vii) Zusetzen von zusätzlichen Bestandteilen.

11. Verfahren nach Anspruch 10, wobei das Pasteurisieren (Schritt (ii)) bei 72°C für 15 Sekunden erfolgt.

12. Verfahren nach einem der Ansprüche 10 bis 11, wobei das Zugeben der Starterkultur (Schritt (iii)) nach Abkühlen der Milch auf Einlabungstemperatur, vorzugsweise bei 30°C, erfolgt.

13. Verfahren nach einem der Ansprüche 10 bis 11, wobei nach Schritt (iii) ein Vorreifen (Schritt (iv)) erfolgt.

14. Verfahren nach einem der Ansprüche 10 bis 13, wobei das Vorreifen über einen Zeitraum von 30 Minuten erfolgt.

15. Milchprodukt, hergestellt nach einem Verfahren gemäß der Ansprüche 9 bis 14.

16. Milchprodukt nach Anspruch 15, wobei das Milchprodukt nach der Herstellung verpackt wird.

17. Milchprodukt nach einem der Ansprüche 15 bis 16, wobei das Verpacken in Kisten, Tonnen, Kanister, Dosen, Tüten, Flaschen, Tetra-Packs, Becher, Folien und/oder Papier erfolgt.

18. Verwendung des Milchprodukts gemäß einem der Ansprüche 1 bis 9 und 15 bis 17 als Lebensmittel, Nahrungsmittel, Nahrungsergänzungsmittel, Medizinprodukt und/oder Arzneimittel.

19. Verwendung des Milchprodukts gemäß Anspruch 18 als Babynahrung und/oder Nahrung für Allergiker.

## Claims

1. A milk product, in the following also referred to as milk mixture, comprising mare's milk and goat's milk, **characterized in that** the milk product comprises 40 % by weight of mare's milk and 60 % by weight of goat's milk.

2. The milk product of claim 1, wherein the milk product is one of raw milk, attested milk, full cream milk, low fat milk, skimmed milk, UHT milk, buttermilk, curdled milk, concentrated milk, powdered milk, kefir, yoghurt, cream cheese, cheese, butter, cream and/or ice cream.

3. The milk product of claim 1 or 2, wherein the milk from mare and goat is one of raw milk, attested milk, low fat milk, skimmed milk and/or UHT milk.

4. The milk product, comprising the milk mixture of one of claims 1 to 3 and additionally other types of milk, selected from human milk, animal milk and/or plant milk.

5. The milk product of claim 4, wherein the animal milk is at least one type of milk, selected from camel's milk, sheep's milk, cow's milk, buffalo's milk and/or donkey's milk.

6. The milk product of claim 4, wherein the plant milk is soya milk.

7. The milk product of claim 4, wherein the human milk is breast milk from different mothers.

8. The milk product of one of claims 1 to 7, wherein the milk product comprises fruits, nuts, vegetables preparation, cactus extracts, cake preparation, kernels, cereals, flavours, spices, herbs, minerals, vitamins and/or pharmaceutical agents as additional components.

9. A method for producing a milk product of claims 1 to 8, comprising the following step:
(i) mixing of mare's milk and goat's milk in a ratio of 40 : 60 % by weight.

10. The method of claim 9, further comprising at least one of the following steps:
(ii) pasteurizing the milk mixture,
(iii) adding starter cultures,
(iv) pre-maturing,
(v) treating with lab-ferment,
(vi) separating the curd-whey-composition,
(vii) addition of additional components.

11. The method of claim 10, wherein the pasteurizing (step (ii)) is performed at 72 °C for 15 seconds.

12. The method of one of claims 10 to 11, wherein the adding of starter cultures (step iii)) is performed after cooling the milk to the lab-ferment treatment temperature, preferably at 30 °C.

13. The method of one of claims 10 to 11, wherein a pre-maturing (step iv) is performed after step (iii).

14. The method of one of claims 10 to 13, wherein the pre-maturing occurs over a period of time of 30 minutes.

15. A milk product, produced according to a method of claims 9 to 14.

16. The milk product of claim 15, wherein the milk product is packaged after production.

17. The milk product of one of claims 15 to 16, wherein the packaging is performed in boxes, tuns, canisters, cans, bags, bottles, tetrapaks, cups, foils and/or paper.

18. Use of the milk product of one of claims 1 to 9 and 15 to 17 as a eatables, edibles, dietary food supplements, medical product and/or pharmaceuticals.

19. Use of the milk product of claim 18 as babies' food and/or food for allergic persons.

## Revendications

1. Produit laitier, dans ce qui suit également mélange de laits, comprenant du lait de jument et du lait de chèvre, **caractérisé en ce que** le produit laitier comprend 40 % en poids de lait de jument et 60 % en poids de lait de chèvre.

2. Produit laitier selon la revendication 1, où le produit laitier est du lait cru, du lait cru sélectionné, du lait entier, du lait demi-écrémé, du lait écrémé, du lait de longue conservation, du babeurre, du lait caillé, du lait concentré, du lait en poudre, du kéfir, du yaourt, du fromage frais, du fromage, du beurre, de la crème fraiche et/ou de la crème glacée.

3. Produit laitier selon la revendication 1 ou 2, où le lait de jument et de chèvre est du lait cru, du lait cru sélectionné, du lait demi-écrémé, du lait écrémé et/ou du lait de longue conservation.

4. Produit laitier comprenant le mélange de laits selon l'une des revendications 1 à 3 et en outre, d'autres types de lait, choisis parmi le lait humain, le lait animal et/ou le lait végétal.

5. Produit laitier selon la revendication 4, où le lait animal est au moins un type de lait choisi parmi le lait de chamelle, le lait de brebis, le lait de vache, le lait de bufflonne et/ou le lait d'ânesse.

6. Produit laitier selon la revendication 4, où le lait végétal est du lait de soya.

7. Produit laitier selon la revendication 4, où le lait humain est du lait maternel de différentes mères.

8. Produit laitier selon l'une des revendications 1 à 7, où le produit laitier comprend comme constituant supplémentaire, des fruits, des noix, des préparations de légumes, des extraits de cactus, des préparations de gâteau, des graines, des céréales, des arômes, des épices, des herbes, des minéraux, des vitamines et/ou des agents actifs pharmaceutiques.

9. Procédé de préparation d'un produit laitier selon l'une des revendications 1 à 8, comprenant l'étape suivante :
(i) mélange du lait de jument et du lait de chèvre en un rapport de 40:60 % en poids.

10. Procédé selon la revendication 9, comprenant par ailleurs, au moins l'une des étapes suivantes :
(ii) pasteurisation du mélange de lait,
(iii) addition de la culture d'ensemencement,
(iv) maturation,
(v) emprésurage
(vi) séparation du mélange caillé/petit-lait,
(vii) addition de constituants supplémentaires.

11. Procédé selon la revendication 10, où la pasteurisation (étape (ii)) est réalisée à 72°C pendant 15 secondes.

12. Procédé selon l'une des revendications 10 à 11, où l'addition de la culture d'ensemencement (étape (iii)) est réalisée après refroidissement du lait à la température d'emprésurage, de préférence à 30°C.

13. Procédé selon l'une des revendications 10 à 11, où après l'étape (iii), on réalise une maturation (étape (iv)).

14. Procédé selon l'une des revendications 10 à 13, où la maturation est réalisée pendant une durée de 30 minutes.

15. Produit laitier préparé selon un procédé suivant les revendications 9 à 14.

16. Produit laitier selon la revendication 15, où le produit laitier est emballé après préparation.

17. Produit laitier selon l'une des revendications 15 à 16, où l'emballage est réalisé dans des boites, des tonneaux, des bidons, des boîtes de conserve, des sachets, des bouteilles, des Tétra-Packs, des pots, des films plastiques et/ou du papier.

18. Utilisation du produit laitier selon l'une des revendications 1 à 9 et 15 à 17 comme aliment, produit alimentaire, complément alimentaire, produit médicinal et/ou agent pharmaceutique.

19. Utilisation du produit laitier selon la revendication 18, comme aliment pour bébé et/ou aliment pour personne allergique.
